# EUROPÄISCHE PATENTSCHRIFT

(11) **EP 2 499 068 B1**
(45) Veröffentlichungstag und Bekanntmachung des Hinweises auf die Patenterteilung: **12.11.2014**
(21) Anmeldenummer: 10737750.9
(22) Anmeldetag: 21.06.2010
(51) Int. Cl.: B65G 1/127

(54) **LAGERSYSTEM MIT EINER MIT EINEM MULTIFUNKTIONSPROFIL VERSEHENEN BESCHICKUNGS- UND/ODER ENTNAHMESTATION**
STORAGE SYSTEM HAVING A LOADING AND/OR REMOVAL STATION PROVIDED WITH A MULTIFUNCTIONAL PROFILE
SYSTÈME D'ENTREPOSAGE COMPORTANT UN POSTE D'ENTRÉE ET/OU DE PRÉLÈVEMENT POURVU D'UN PROFILÉ MULTIFONCTION

(30) Priorität: 11.11.2009 DE 102009052541
(43) Veröffentlichungstag der Anmeldung: 19.09.2012
(73) Patentinhaber: Kardex Produktion Deutschland GmbH, 86476 Neuburg/Kammel (DE)
(72) Erfinder: PRESCHKE, Harald, 89269 Vöhringen (DE); KOLLMANN, Wolfgang, 87772 Pfaffenhausen (DE)
(74) Vertreter: Grünecker, Kinkeldey, Stockmair & Schwanhäusser
(86) Internationale Anmeldenummer: PCT/EP2010/003716
(87) Internationale Veröffentlichungsnummer: WO 2011/057685

(56) Entgegenhaltungen:
- EP-A1- 0 508 903
- EP-A1- 0 589 808
- DE-U1-202009 010 882
- US-A- 4 801 236
- US-A1- 2005 254 262

## Beschreibung

Die Erfindung betrifft ein automatisches Lagersystem, wie beispielsweise einen Lagerlift oder ein Paternoster-System mit einer Beschickungs- und/oder Entnahmeöffnung zum Ein- bzw. Auslagern von Lagergütern in das oder aus dem Lagersystem.

Lagersysteme der vorbenannten Art sind z.B. aus US 4 801 236 oder EP 0 508 903, die den Oberbegriff des Anspruchs 1 offenbaren, bekannt. Sie können als Lagerlifte ausgeführt sein, in denen eine Vielzahl von Lagerplätzen über und nebeneinander angeordnet sind oder als Paternoster-Systeme mit umlaufenden Lagergutträgern ausgeführt sein. Auf den Lagerplätzen können Lagergüter entweder direkt oder mit Hilfe sie tragender Lagergutträger eingelagert werden. Beim Einlagern werden die Lagergüter bzw. Lagergutträger von einer Bedienperson durch eine Beschickungs- und/oder Entnahmeöffnung in einer Beschickungs- und/oder Entnahmestation positioniert, um dort von einer automatischen Fördervorrichtung aufgenommen und zu einem Lagerplatz transportiert zu werden.

Entsprechend wird eingelagertes Lagergut, das von der Bedienperson an einer Steuereinrichtung der Lagervorrichtung angefordert wird, von der Fördervorrichtung von seinem Lagerplatz zur Beschickungs- und/oder Entnahmestation transportiert, an der durch die Beschickungs- und/oder Entnahmeöffnung auf das Lagergut zugegriffen werden kann. Die Steuereinrichtung ist üblicherlicherweise in einem Bedienbereich des Lagersystems angeordnet, in dem sich eine Bedienperson während des Betriebes aufhält, und umfasst Bediengeräte und Anzeigemittel.

Ein Nachteil der aus dem Stand der Technik bekannten Lagersysteme ist, dass der Bedienbereich, der die Steuereinrichtung umfasst, nicht oder nur mit großem Aufwand an unterschiedliche Umgebungsbedingungen, beispielsweise veränderte Räumlichkeiten, unterschiedlich große Bedienpersonen oder an eine sitzende oder stehende Bedienung des Lagersystems, angepasst werden kann. Anzeigemittel der Steuereinrichtung, Halterungen für Bediengeräte oder andere Zusatzgeräte müssen für eine Anpassung des Lagersystems von dem Lagersystem abmontiert und an anderer Stelle wieder anmontiert werden. Dazu sind, beispielsweise für Schraubverbindungen, zusätzliche Befestigungsorgane, beispielsweise Gewindebohrungen, vorzusehen.

Folglich liegt der Erfindung die Aufgabe zugrunde, die Anpassbarkeit des Lagersystems an unterschiedliche Umgebungsbedingungen und damit dessen Bedienungsfreundlichkeit zu verbessern.

Diese Aufgabe wird erfindungsgemäß für ein automatisches Lagersystem der eingangs genannten Art dadurch gelöst, dass entlang und oberhalb der Beschickungs- und/oder Entnahmeöffnung wenigstens ein Multifunktionsprofil mit wenigstens einem Befestigungsorgan und wenigstens einer elektrischen Anschlussmöglichkeit angeordnet ist, und dass an dem Multifunktionsprofil elektrische Zusatzgeräte in beliebigen veränderbaren Positionen entlang der Beschickungs- und/oder Entnahmeöffnung veränderbaren Position montier- und elektrisch anschließbar sind, wobei die elektrische Anschlussmöglichkeit ein in einem Hohlraum des Multifunktionsprofils verlegtes Kabel umfasst, von dem ein oder mehrere seiner Leiter durch eine Öffnung aus dem Hohlraum herausgeführt sind.

Die erfindungsgemäße Lösung bietet den Vorteil, dass Zusatzgeräte in beliebigen Positionen entlang der Beschickungs- und/oder Entnahmeöffnung befestigt werden können, ohne dass zusätzliche oder neue Befestigungsorgane vorgesehen werden müssen. Durch das Multifunktionsprofil können beispielsweise Lampen, Bediengeräte oder Halterungen für zusätzliche Hilfsmittel, beispielsweise Bildschirme, Schreibunterlagen oder Ablagen befestigt werden.

Indem das Multifunktionsprofil oberhalb der Beschickungs- und/oder Entnahmeöffnung angeordnet ist, steht der Raum unterhalb der Beschickungs- und/oder Entnahmeöffnung für Bedienpersonen oder für eine Ablage von Lagergut vor dem Lagersystem zur Verfügung. Beleuchtungsmittel können für eine gute Ausleuchtung des Bedienbereiches an dem Multifunktionsprofil oberhalb der Beschickungs- und/oder Entnahmeöffnung befestigt werden, während sich zugleich die Möglichkeit einer ergonomischen Anordnung von Anzeigemitteln etwa auf Augenhöhe der Bedienperson bietet.

Erfindungsgemäß erstreckt sich das Multifunktionsprofil über die Beschickungs- und/oder Entnahmeöffnung hinaus erstrecken. An dem Multifunktionsprofil befestigte Zusatzgeräte können somit für eine Verbesserung der Zugänglichkeit auf eine Seite der Beschickungs- und/oder Entnahmeöffnung geschoben werden oder seitlich an der Beschickungs- und/oder Entnahmeöffnung angeordnet sein.

Das erfindungsgemäße Lagersystem kann durch verschiedene, voneinander unabhängige, jeweils für sich vorteilhafte Ausgestaltungen weiterentwickelt werden. Auf diese Ausgestaltungen und die mit den Ausgestaltungen jeweils verbundenen Vorteile wird im Folgenden kurz eingegangen.

In einer vorteilhaften Ausgestaltung eines erfindungsgemäßen Lagersystems kann das Befestigungsorgan von wenigstens einer Befestigungsnut gebildet sein, die entlang der Beschickungs- und/oder Entnahmeöffnung verläuft. In die Nut eingesetzte Befestigungselemente können auf diese Weise entlang der Entnahmeöffnung verschieblich sein. Für eine Befestigung von handelsüblichen Displays kann eine mit Befestigungselementen versehene Halterung nach dem VESA-Standard vorgesehen sein, die unmittelbar mit dem Befestigungsorgan des Multifunktionsprofils verbindbar ausgestaltet ist.

Um Signal übertragende oder Strom leitende Kabel oder Daten übertragende Glasfaserkabel in das Multifunktionsprofil zu integrieren, können entlang der Beschickungsöffnung verlaufende, durchgängige Kanäle vorgesehen sein. Die Kanäle können entlang einer Längserstreckung des Multifunktionsprofils eine oder mehrere Öffnungen aufweisen, durch welche in das Multifunktionsprofil aufgenommene Kabel oder Leiter aus diesem herausgeführt werden können. Seitlich am Multifunktionsprofil angeordnete Öffnungen der Kanäle können außerdem der Aufnahme von Steckkontakten oder Steckbuchsen dienen, an welchen elektrische Zusatzgeräte angeschlossen werden können. Vorzugsweise sind die Steckkontakte oder Steckbuchsen gemäß handelsüblichen Standards, beispielsweise als Universal Serial Bus (USB) oder Schukostecker ausgestaltet.

In einer weiteren vorteilhaften Ausgestaltung kann das Multifunktionsprofil an einer Stützstruktur des Lagersystems befestigt sein. Somit ist eine stabile Befestigung des Multifunktionsprofils sowie der an dem Multifunktionsprofil befestigten Zusatzgeräte gewährleistet. An das Multifunktionsprofil angrenzende Abschnitte einer Verkleidung des automatischen Lagersystems oder Wandpaneele können wenigstens abschnittsweise an dem Multifunktionsprofil befestigt sein, um somit insbesondere im Bereich der Beschickungs- und/oder Entnahmeöffnung die Verkleidung gegen Schwingungen oder Stöße zu versteifen und/oder eine stabile Befestigung der Verkleidung zu erreichen.

Das Multifunktionsprofil kann von einer Stützstruktur des Lagersystems gebildet sein oder eine Stützstrebe einer Stützstruktur bilden. Auf diese Weise können die Funktionen des Multifunktionsprofils in die Stützstruktur integriert werden, um die Anzahl der Teile des Lagersystems zu reduzieren.

An dem Multifunktionsprofil kann ein elektrisches Anzeigemittel angebracht sein. Das elektrische Anzeigemittel kann beispielsweise der Anzeige Lagerbestellungen dienen oder als Teil einer Steuereinrichtung beispielsweise den Zustand des Lagersystems oder die Anzahl verfügbarer Lagergüter anzeigen.

Das Anzeigemittel kann verschieblich an dem Multifunktionsprofil angebracht sein, um auf einfache Weise abhängig vom Umfeld des Lagersystems, von dem an der Beschickungs- und/oder Entnahmeöffnung erforderlichen Raum für das Lagergut oder den Anforderungen des Bedienpersonals unterschiedliche Positionen des Anzeigemittels einstellen zu können.

Ferner kann in einer weiteren vorteilhaften Ausgestaltung des automatischen Lagersystems eine Beleuchtung an dem Multifunktionsprofil angebracht sein. Die Beleuchtung kann wie das Anzeigemittel verschieblich an dem Multifunktionsprofil befestigt sein. Die verschiebliche Anordnung des Anzeigemittels und/oder des Multifunktionsprofils kann beispielsweise über Nutensteine erfolgen, die in einer Befestigungsnut des Multifunktionsprofils geführt sind. In Hinterschneidungen der Befestigungsnut geführte Nutensteine können durch Schraubbolzen, die in Gewinden der Nutensteine eingeschraubt sind und reibschlüssig auf einer Außen- oder Innenwand des Multifunktionsprofils drücken, arretiert sein.

In einer weiteren vorteilhaften Ausgestaltung des Lagersystems kann die Beleuchtung in das Multifunktionsprofil integriert sein. Beispielsweise kann unmittelbar an dem Multifunktionsprofil oder in einer Öffnung des Multifunktionsprofils eine Fassung zur Aufnahme eines Leuchtmittels vorgesehen sein. Das Multifunktionsprofil kann wenigstens abschnittsweise aus einem elektrisch leitenden Material hergestellt sein und somit als elektrischer Leiter und insbesondere als Erdungsleiter für den elektrischen Anschluss eines Zusatzgerätes dienen.

Die elektrische Anschlussmöglichkeit des Multifunktionsprofils umfasst wenigstens einen elektrischen Leiter welcher zumindest abschnittsweise in einem Hohlraum des Multifunktionsprofils verläuft. Der elektrische Leiter kann die elektrische Anschlussmöglichkeit mit einer Stromversorgung des Lagersystems verbinden und beispielsweise an einer Steuereinheit des Lagersystems angeschlossen sein. Alternativ oder zusätzlich kann an dem Multifunktionsprofil eine Anschlussmöglichkeit vorgesehen sein, die über einen oder mehrere Lichtwellenleiter Signal übertragend mit einer Steuereinheit des Lagersystems verbunden ist.

Im Folgenden wird die Erfindung anhand unterschiedlicher Ausführungsformen mit Bezug auf die Figuren beispielhaft erläutert. Dabei stellen die beschriebenen Ausführungsformen lediglich mögliche Ausgestaltungen dar, die für den jeweiligen Anwendungsfall modifiziert werden können. Einzelne, für sich vorteilhafte Merkmale können gemäß der obigen Beschreibung der vorteilhaften Ausgestaltungen bei der jeweils beschriebenen Ausführungsform hinzugefügt oder weggelassen werden.

Es zeigen:
- Fig. 1: eine schematische perspektivische Teilansicht eines erfindungsgemäßen Lagersystems;
- Fig. 2: eine Seitenansicht eines Multifunktionsprofils eines erfindungsgemäßen automatischen Lagersystems.

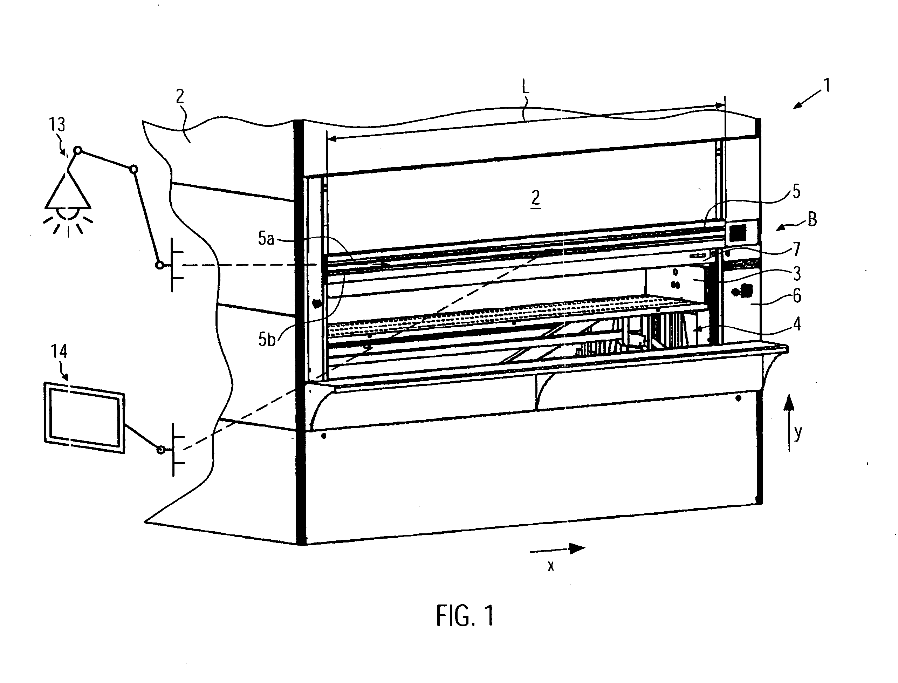

Zunächst wird der Aufbau eines erfindungsgemäßen Lagersystems mit Bezug auf das Ausführungsbeispiel der Fig. 1 beschrieben.

Das Lagersystem 1 ist mit einer Verkleidung 2 versehen, die ein Lagervolumen umschließt. In dem Lagervolumen sind Lagergutträger 3 angeordnet, durch die Lagergut aufnehmbar ist. Die Lagergutträger 3 sind innerhalb des von der Verkleidung 2 umgebenden Lagervolumens beweglich angeordnet, um Lagergut, das durch eine Beschickungs- und/oder Entnahmeöffnung 4 auf oder in den Lagergutträger 3 bewegt wurde, innerhalb des Lagersystems in einer vorbestimmten Position anzuordnen.

Oberhalb der Beschickungs- und/oder Entnahmeöffnung 4 ist ein Multifunktionsprofil 5 befestigt, das sich entlang der Öffnung 4 oder parallel zur Öffnung 4 erstreckt. Das Multifunktionsprofil 5 weist in einer Seitrichtung X eine Länge L auf, die vorzugsweise der Länge der Beschickungs- und/oder Entnahmeöffnung 4 in der Seitrichtung X entsprechen kann. Somit kann sich das Multifunktionsprofil 5 über die gesamte Länge der Öffnung 4 erstrecken.

In Seitrichtung X seitlich an der Öffnung 4 ist eine Steuereinheit 6 angeordnet, welche der Steuerung des Lagersystems 1 dient. Die Steuereinheit 6 ist Teil einer Steuereinrichtung B, über welche eine Bedienperson das Lagersystem steuern kann. Über die Steuereinheit 6 ist ein (hier nicht gezeigter) Antrieb steuerbar, der die Lagergutträger 3 innerhalb des Lagersystems 1 antreibt. Die Steuereinrichtung B kann weitere Anzeigemittel 14 umfassen, die Informationen über das Lagersystem 1 liefern und als Touchscreen zugleich als Eingabemittel dienen können.

Das Multifunktionsprofil 5 erstreckt sich parallel zur Öffnung 4 bis zu der seitlich an der Öffnung 4 angeordneten Steuereinheit 6. Hier nicht gezeigte Stromversorgungskabel, die im Bereich der Steuereinheit 6 verlegt sind, können somit von der Steuereinheit 6 aus in das unmittelbar angrenzende Multifunktionsprofil 5 verlegt und zugleich durch das Multifunktionsprofil 5 verdeckt sein. Zur Aufnahme eines oder mehrerer Stromversorgungskabel oder elektrischer Leiter weist das Multifunktionsprofil 5 einen durchgängigen Kanal oder einen Hohlraum auf, in die oder den eine elektrische Leitung aufgenommen ist.

Das Multifunktionsprofil 5 ist mit zwei Befestigungsorganen 5a, 5b versehen, die als Befestigungsnuten ausgebildet sind und in Seitrichtung X der Öffnung 4 verlaufen. In die Befestigungsorgane 5a, 5b sind Befestigungselemente, beispielsweise Nutensteine, Hammerkopfschrauben oder Hammermuttern einsetzbar, die mit Halterungen von Zusatzgeräten verbunden werden können. Somit können über die Befestigungsorgane 5a, 5b beispielsweise elektrische Zusatzgeräte an dem Lagersystem 1 befestigt werden, die über einen oder mehrere elektrische Anschlussmöglichkeiten an dem Funktionsprofil 5 mit einer Stromversorgung oder mit der Steuereinheit 6 verbindbar sind.

Das Multifunktionsprofil 5 ist unmittelbar oberhalb der Beschickungs- und Entnahmeöffnung 4 befestigt, bietet jedoch ausreichend Raum zur Bedienung einer im oberen Bereich der Öffnung 4 angeordneten Verschlussklappe 7. Das Multifunktionsprofil 5 bildet eine Versteifung der Verkleidung 2 insbesondere oberhalb der Beschickungs- und Entnahmeöffnung 4. Das Multifunktionsprofil 5 kann des Weiteren an einer Stützstruktur des Lagersystems 1 befestigt sein oder eine Stützstrebe der Stützstruktur des Lagersystems 1 bilden, die auf das Lagersystem 1 wirkende Belastungen aufnimmt und die Stützstruktur des Lagersystems 1 versteift.

An dem Multifunktionsprofil 5 können Halterungen für Hilfsmittel*,* beispielsweise Tastaturen oder Schreibunterlagen, oder elektrische oder elektronische Zusatzgeräte 13, 14, wie beispielsweise Beleuchtungsmittel 13, Steuereinrichtungen oder Anzeigemittel 14 befestigt werden. Die Befestigung kann über mit Gewinden versehenen Nutensteine, Hammermuttern oder Schrauben mit Hammerköpfen erfolgen, die in das Befestigungsorgan 5a und/oder 5b eingesetzt sind. Die Hilfsmittel oder Zusatzgeräte können verschieblich an dem Multifunktionsprofil 5 angeordnet sein, wobei die Befestigungsorgane 5a, 5b als Führungsorgane dienen. Da sich die Befestigungsorgane 5a, 5b über die gesamte Länge L des Multifunktionsprofils 5 erstrecken, können die als Nutensteine, Hammermuttern oder Schrauben mit Hammerkopf ausgestalten Befestigungselemente entlang der gesamte Länge L des Multifunktionsprofils 5 verschoben oder positioniert werden.

Gemäß weiteren vorteilhaften Ausgestaltungen des Lagersystems kann das Multifunktionsprofil 5 auch seitlich und/oder unterhalb der Beschickungs- und/oder Entnahmeöffnung 4 des Lagersystems 1 befestigt werden. Somit kann eine Halterung, ein Hilfsmittel oder ein Zusatzgerät alternativ oder zusätzlich zur Seitrichtung X auch in einer Höhenrichtung Y positionierbar sein.

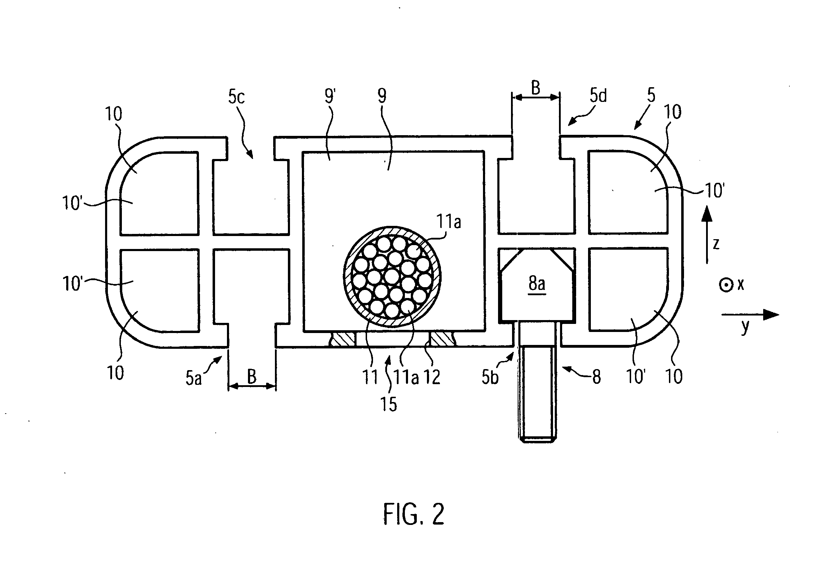

Fig. 2 ist eine Seitenansicht eines zweiten Ausführungsbeispiels eines Multifunktionsprofils 5 in Seitrichtung X. An den Befestigungsorganen 5a, 5b sind Befestigungselemente 8 befestigbar. Das Befestigungselement 8 ist beispielhaft als Schraube ausgestaltet. Das Befestigungselement 8 weist ein Halteelement 8a auf, das in das Befestigungsorgan 5b des Multifunktionsprofils 5 eingeschoben ist. In dem Ausführungsbeispiel der Fig. 2 ist das Halteelement 8a von einem Schraubenkopf des als Schraube ausgestalteten Befestigungselements 8 gebildet. Alternativ kann das Halteelement von einem Nutenstein gebildet sein, der Gewinde zur Aufnahme eines oder mehrerer Schraubbolzen aufweist, oder von einer in die Befestigungsorgane 5a, 5b des Multifunktionsprofils 5 einschiebbaren ausgestalteten Schraubenmutter. Das Halteelement 8a kann in Seitrichtung X eine Breite aufweisen, die kleiner als eine Breite B eines Einführschlitzes der Befestigungsorgane 5a, 5b ist. Somit kann das Halteelement 8a bei der Montage in einer beliebigen Position entlang der Befestigungsorgane 5a, 5b eingesetzt oder nach dem Einsetzen in einer Seitrichtung X verschoben werden. Nach dem Einsetzen kann das Halteelement 8a um 90° um eine in Z-Richtung Z verlaufende Achse gedreht werden, bis die in Fig. 2 gezeigte Position erreicht ist, in der durch das Halteelement 8a ein Formschluss mit dem Multifunktionsprofil 5 herstellbar ist.

Eine Festlegung eines Befestigungselementes gegenüber dem Multifunktionsprofil 5 kann durch Aufbringen einer Querkraft auf das Befestigungselement 8, beispielsweise durch Verschrauben des Befestigungselementes 8 mit einem auf das Multifunktionsprofil 5 aufgesetzten Zusatzgerät erfolgen. Alternativ kann eine auf das Befestigungselement wirkende Haltefeder, die zwischen Multifunktionsprofil 5 und Halteelement angeordnet ist, das Halteelement gegen wenigstens eine Innenwand eines als Befestigungsnut ausgestalteten Befestigungsorgans 5a oder 5b drückt und somit einen Reibschluss zwischen Befestigungselement und Multifunktionsprofil 5 erzeugt.

Auch auf einer in Richtung Z oder in Richtung des Lagersystems 1 weisenden Seite des Multifunktionsprofils 5 sind Befestigungsorgane 5c, 5d angeordnet. Die Befestigungsorgane 5c, 5d sind identisch zu den Befestigungsorganen 5a, 5b ausgestaltet und ermöglichen eine Befestigung des Multifunktionsprofils in einer in Seitrichtung X gegenüber dem Lagersystem 1 veränderbaren Position.

Das Multifunktionsprofil 5 umfasst Hohlräume 9, 10, durch welche das Multifunktionsprofil 5 bei hoher Steifigkeit materialsparend ausgestaltet ist. Die Hohlräume 9, 10 bilden durchgängige Kanäle 9', 10' und sind somit zur Aufnahme von elektrischen Leitern oder Leitungen, beispielsweise Stromkabeln oder Signalkabeln geeignet. Elektrische oder optische Leiter in den Kanälen 9', 10' können eine elektrische oder Signal übertragende Anschlussmöglichkeit des Multifunktionsprofils 5 bilden und eine Stromversorgung oder einen Signal übertragenden Anschluss von an dem Multifunktionsprofil 5 befestigten Zusatzgeräten herstellen.

In dem Hohlraum 9 des Multifunktionsprofils 5 ist ein Kabel 11 verlegt, in dem eine Vielzahl elektrischer Leiter 11 a zusammengefasst sind. Das Kabel 11 erstreckt sich in Seitrichtung X entlang des Hohlraums 9 bis zu einem oder mehreren elektrischen Zusatzgeräten, die an dem Multifunktionsprofil 5 gehalten sind. Das Kabel 11 oder einer oder mehrere seiner Leiter 11a können durch eine Öffnung 12 aus dem Hohlraum 9 herausgeführt sein, um ein benachbart angeordnetes Zusatzgerät elektrisch anzuschließen. Vorzugsweise ist die Öffnung 12 benachbart zu dem hier nicht gezeigten Zusatzgerät angeordnet. Zusammen mit der Öffnung 12 bildet das Kabel 11 eine elektrische Anschlussmöglichkeit 15. Die elektrische Anschlussmöglichkeit 15 kann des weiteren einen Steckverbinder, der vorzugsweise als standardisierter Steckverbinder ausgestaltet ist umfassen. Der Steckverbinder kann in einer Öffnung 12 des Multifunktionsprofils 5 angeordnet sein.

Das Multifunktionsprofil 5 kann aus einem elektrisch leitenden Material hergestellt sein oder elektrisch leitendes Material umfassen. Somit kann das Multifunktionsprofil 5 einen elektrischen Leiter, insbesondere zur Erdung angeschlossener elektrischer Zusatzgeräte bilden.

Das Multifunktionsprofil 5 kann beispielsweise aus Aluminium oder aus Kunststoff gefertigt sein. Vorzugsweise ist das Multifunktionsprofil 5 im Strangpressverfahren hergestellt.

## Patentansprüche

1. Automatisches Lagersystem (1), wie beispielsweise ein Lagerlift oder ein Paternoster-System, mit einer Beschickungs- und/oder Entnahmeöffnung (4) zum Ein- bzw. Auslagern von Lagergütern in das oder aus dem Lagersystem (1), **dadurch gekennzeichnet, dass** entlang und oberhalb der Beschickungs- und/oder Entnahmeöffnung (4) wenigstens ein Multifunktionsprofil (5) mit wenigstens einem Befestigungsorgan (5a, 5b) und wenigstens einer elektrischen Anschlussmöglichkeit (15) angeordnet ist, an dem elektrische Zusatzgeräte (13, 14) in beliebigen veränderbaren Positionen entlang der Beschickungs-und/oder Entnahmeöffnung (4) montier- und elektrisch anschließbar sind, wobei die elektrische Anschlussmöglichkeit (15) ein in einem Hohlraum (9) des Multifunktionsprofils (5) verlegtes Kabel umfasst, von dem ein oder mehrere seiner Leiter (11a) durch eine Öffnung (12) aus dem Hohlraum (9) herausgeführt sind.

2. Automatisches Lagersystem (1) nach Anspruch 1, **dadurch gekennzeichnet, dass** entlang der Beschickungs- und/oder Entnahmeöffnung (4) verlaufende, durchgängige Kanäle (9', 10') vorgesehen sind.

3. Automatisches Lagersystem (1) nach Anspruch 1 oder 2, **dadurch gekennzeichnet, dass** das Befestigungsorgan (5a, 5b) wenigstens eine entlang der Beschickungs- und/oder Entnahmeöffnung (4) verlaufende Befestigungsnut umfasst.

4. Automatisches Lagersystem (1) nach einem der Ansprüche 1 bis 3, **dadurch gekennzeichnet, dass** das Multifunktionsprofil (5) an einer Stützstruktur des Lagersystems (1) befestigt ist.

5. Automatisches Lagersystem (1) nach einem der Ansprüche 1 bis 4, **dadurch gekennzeichnet, dass** am Multifunktionsprofil (5) ein elektrisches Anzeigemittel (14) einer Steuereinrichtung (B) des Lagersystems (1) angebracht ist.

6. Automatisches Lagersystem (1) nach Anspruch 5, **dadurch gekennzeichnet, dass** das Anzeigemittel (14) verschieblich angebracht ist.

7. Automatisches Lagersystem (1) nach einem der Ansprüche 1 bis 4, **dadurch gekennzeichnet, dass** am Multifunktionsprofil (5) eine Beleuchtung (13) angebracht ist.

8. Automatisches Lagersystem (1) nach Anspruch 7, **dadurch gekennzeichnet, dass** die Beleuchtung (13) in das Multifunktionsprofil (5) integriert ist.

## Claims

1. Automatic storage system (1), such as a warehouse lift or a paternoster system, having a loading and/or removal opening (4) for putting storage goods into the storage system (1) and taking said goods out of said storage system, respectively, **characterised in that** at least one multifunctional profile (5) having at least one fastening member (5a, 5b) and at least one electrical connection means (15), to which additional electrical devices (13, 14) can be mounted and electrically connected in any desired, variable positions along the loading and/or removal opening (4), is arranged along and above the loading and/or removal opening (4), wherein the electrical connection means (15) comprises a cable, which is laid in a hollow space (9) in the multifunctional profile (5) and from which one or a plurality of the conductors (11a) thereof are led out of the hollow space (9) through an opening (12).

2. Automatic storage system (1) according to Claim 1, **characterised in that** continuous channels (9', 10') are provided, which run along the loading and/or removal opening (4).

3. Automatic storage system (1) according to Claim 1 or 2, **characterised in that** the fastening member (5a, 5b) comprises at least one fastening groove, which runs along the loading and/or removal opening (4).

4. Automatic storage system (1) according to any one of Claims 1 to 3, **characterised in that** the multifunctional profile (5) is fastened to a supporting structure of the storage system (1).

5. Automatic storage system (1) according to any one of Claims 1 to 4, **characterised in that** an electrical display means (14) of a control device (B) of the storage system (1) is attached to the multifunctional profile (5).

6. Automatic storage system (1) according to Claim 5, **characterised in that** the display means (14) is attached in a displaceable manner.

7. Automatic storage system (1) according to any one of Claims 1 to 4, **characterised in that** a lighting means (13) is attached to the multifunctional profile (5).

8. Automatic storage system (1) according to Claim 7, **characterised in that** the lighting means (13) is integrated into the multifunctional profile (5).

## Revendications

1. Système de magasin de stockage automatique (1), comme par exemple un magasin de stockage à navette ou un système du type pater noster, comprenant une ouverture de chargement et/ou de prélèvement (4) pour venir stocker et respectivement déstocker des produits à stocker dans le ou hors du système de magasin de stockage (1), **caractérisé en ce que** le long et au-dessus de l'ouverture de chargement et/ou de prélèvement (4) est agencé au moins un profilé multifonctions (5) comportant au moins un organe de fixation (5a, 5b) et au moins une possibilité de raccordement électrique (15), et sur lequel peuvent être montés et raccordés électriquement, des appareils auxiliaires électriques (13, 14), dans des positions variables quelconques le long de l'ouverture de chargement et/ou de prélèvement (4), la possibilité de raccordement électrique (15) comprenant un câble, qui est posé dans une cavité (9) du profilé multifonctions (5), et dont un ou plusieurs de ses conducteurs (11a) sont menés hors de la cavité (9) à travers une ouverture (12).

2. Système de magasin de stockage automatique (1) selon la revendication 1, **caractérisé en ce que** sont prévus des canaux (9', 10') continus, s'étendant le long de l'ouverture de chargement et/ou de prélèvement (4).

3. Système de magasin de stockage automatique (1) selon la revendication 1 ou la revendication 2, **caractérisé en ce que** l'organe de fixation (5a, 5b) comprend au moins une rainure de fixation s'étendant le long de l'ouverture de chargement et/ou de prélèvement (4).

4. Système de magasin de stockage automatique (1) selon l'une des revendications 1 à 3, **caractérisé en ce que** le profilé multifonctions (5) est fixé à une structure de support du système de magasin de stockage (1).

5. Système de magasin de stockage automatique (1) selon l'une des revendications 1 à 4, **caractérisé en ce que** sur le profilé multifonctions (5) est monté un moyen d'affichage électrique (14) d'un dispositif de commande (B) du système de magasin de stockage (1).

6. Système de magasin de stockage automatique (1) selon la revendication 5, **caractérisé en ce que** le moyen d'affichage (14) est monté de manière coulissante.

7. Système de magasin de stockage automatique (1) selon l'une des revendications 1 à 4, **caractérisé en ce que** sur le profilé multifonctions (5) est monté un éclairage (13).

8. Système de magasin de stockage automatique (1) selon la revendication 7, **caractérisé en ce que** l'éclairage (13) est intégré au profilé multifonctions (5).
